# FASCICULE DE BREVET EUROPEEN

(11) **EP 0 778 103 B1**
(45) Date de publication et mention de la délivrance du brevet: **06.05.1999**
(21) Numéro de dépôt: 96402627.2
(22) Date de dépôt: 05.12.1996
(51) Int. Cl.: B23H 3/00, B23H 11/00

(54) **Procédé et dispositif d'usinage électrochimique de pièces en série**
Verfahren und Vorrichtung zum serienweise elektrochemischen Ätzen von Werstücken
Process and apparatus for electrochemically etching series of workpieces

(30) Priorité: 06.12.1995 FR 9514391
(43) Date de publication de la demande: 11.06.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Stenneler, Jacques Marie Pierre, 77820 Le Chatelet en Brie (FR); Lechervy, Pierre Marc Serge, 91700 Ste Genevieve des Bois (FR)

(56) Documents cités:
- EP-A- 0 227 223
- DE-A- 1 939 284

## Description

### Domaine de l'invention

L'invention concerne la fabrication en série de pièces métalliques de volume relativement réduit, par un usinage électrochimique. Elle concerne, en particulier, la fabrication de pièces aux formes complexes, telles que des aubes de turbomachine, des supports ou des leviers.

### Art antérieur et problème posé

Il est connu de fabriquer des pièces métalliques de formes complexes par usinage électrochimique. Les différentes électrodes utilisées possèdent des surfaces d'usinage correspondant avec les formes à obtenir sur la pièce. Cependant, pour usiner une pièce, il est nécessaire de la positionner et de la fixer dans cette position sur la machine. A la fin de l'usinage, il est enfin nécessaire de la déverrouiller de sa fixation. De plus, de manière à obtenir un positionnement exact prédéterminé, il est nécessaire de prévoir sur la pièce au moins une surface de référence.

Toutes ces opérations sont relativement onéreuses, puisqu'elles nécessitent l'intervention d'un opérateur pour fixer la pièce et un usinage de la surface de référence.

Le but de l'invention est de remédier à cet inconvénient en proposant un procédé et un dispositif d'usinage par électrochimie de pièces identiques en série ne nécessitant pas l'intervention d'un opérateur entre chaque pièce d'une série, ni l'usinage d'une surface de référence.

D'autre part, dans le domaine de l'usinage par enlèvement de matière, et en particulier dans le domaine du tournage, c'est-à-dire de l'usinage de pièces de révolution, on connaît l'utilisation de tours revolvers ou de tours à décolleter. Ce type de machine est susceptible d'usiner une série de pièces identiques à partir d'une même barre métallique, par avancement automatique et échelonné de ladite barre à travers la broche du tour.

### Résumé de l'invention

A cet effet, un premier objet principal de l'invention est un procédé de réalisation de pièces en trois dimensions par usinage électrochimique à partir d'une barre métallique connectée à une source de courant et comprenant les phases suivantes :
- avancer la barre devant et/ou à côté d'au moins une électrode d'usinage ;
- réaliser des formes déterminées dans la pièce par plongée de la ou des électrodes dans la pièce ; et
- tronçonner la barre au niveau d'une surface arrière de la pièce ;
- avancer la barre d'une longueur nécessaire et suffisante pour usiner la pièce suivante.

Ce tronçonnage s'effectue de préférence également par électrochimie au moyen d'une électrode couteau.

La source de courant peut être connectée à la barre, soit par une tresse fixée à cette barre, soit par des mors de serrage maintenant la barre en position de manière fixe.

La section de la barre est optimisée en fonction de la géométrie des pièces à réaliser. Il est préférable que la barre puisse tourner autour de son axe longitudinal pour pouvoir réaliser des usinages sur toute la périphérie de la barre.

Le liquide électrolytique utilisé doit recouvrir les surfaces d'extrémité de la barre dans laquelle les pièces doivent être usinées par arrosage au moyen d'un jet débouchant sur ces surfaces d'extrémité.

On peut également utiliser, pour cet arrosage, une douche.

Le deuxième objet principal de l'invention est un dispositif d'usinage par électrochimie pour la mise en oeuvre du procédé qui vient d'être résumé, et comprenant principalement :
- un bâti ;
- une broche de maintien et d'alimentation de la barre définissant un axe principal et comprenant elle-même :
   . un dispositif d'avance de la barre ; et
   . un dispositif de support de serrage de l'extrémité de la barre à usiner à l'extérieur de la broche ;
   . un moyen d'étanchéité empêchant l'électrolyte d'atteindre les dispositifs d'avancement et de serrage de la barre ;
- un ensemble d'usinage comprenant :
   . au moins une cathode d'usinage placée à l'extérieur de la broche, montée coulissante de manière à pouvoir pénétrer dans l'extrémité à usiner de la barre ; et
   . un système d'alimentation en électrolyte pour arroser l'extrémité de la barre en dehors de la broche ; et
- des moyens de commande de l'ensemble d'usinage et de la broche.

De préférence, le moyen d'étanchéité est constitué d'une chambre alimentée en air en surpression, entourant la barre et ayant un diamètre interne légèrement supérieur au diamètre externe de la barre, pour laisser s'échauffer l'air vers l'extrémité de la barre à usiner.

L'axe principal de la broche est de préférence horizontal.

On utilise de préférence une cathode en forme de couteau pour sectionner l'extrémité de la barre devant constituer la pièce.

### Liste des figures

L'invention et ses différentes caractéristiques techniques seront mieux comprises à la lecture de la description suivante, accompagnée de deux figures représentant respectivement :
- figure 1, une vue longitudinale du dispositif selon l'invention ;
- figure 2, une vue de côté du dispositif selon l'invention ; et
- les figures 3A, 3B et 3C, des schémas relatifs à trois réalisations différentes de la chambre de surpression.

### Description détaillée d'une réalisation de l'invention

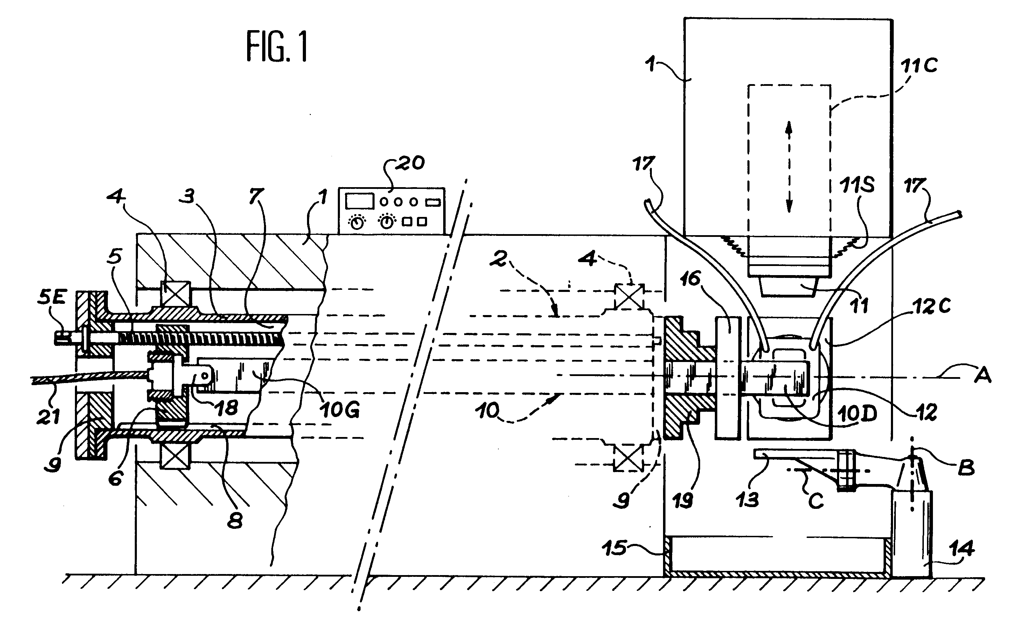

En référence à la figure 1, le dispositif selon l'invention comprend un bâti 1 qui s'étend horizontalement, en particulier sur la gauche. A l'intérieur de cette partie gauche du bâti 1, se trouve une broche de maintien et d'alimentation d'une barre 10. En effet, cette broche 2 est creuse, c'est-à-dire qu'elle possède une chambre 7 à l'intérieur de laquelle est placée la barre 10. La broche 2 est montée tournante par l'intermédiaire de paliers 4. On note que cette rotation n'a lieu que sur 90°, mais qu'elle n'est pas permanente, comme sur un tour d'usinage par enlèvement de matière.

Cette broche 2 se présente sous la forme d'un cylindre à l'intérieur duquel est positionnée la barre 10 destinée à constituer les pièces à usiner. Celle-ci est montée horizontalement selon un axe principal, référencé A. Elle est également montée coulissante le long de cet axe principal A. Dans ce but, on utilise une bague de translation 6 montée coulissante sur un rail horizontal 8 placé à l'intérieur de la broche 2 et solidaire de la barre 10. A cet effet, on utilise une pièce de fixation 18, par exemple vissée sur une extrémité gauche 10G de la barre 10 et solidaire de la bague de translation 6. Le mouvement de translation peut être obtenu au moyen d'une vis sans fin 5 installée entre deux flasques latéraux 9 et tournant horizontalement à l'intérieur de la broche 2. L'entraînement en rotation de cette vis sans fin 5 n'a pas été représenté, mais peut être constitué d'un moteur entraînant cette vis sans fin 5 par l'intermédiaire de son extrémité 5E possédant un carré d'entraînement.

On conçoit ainsi que la barre 10 puisse être translatée selon l'axe A, de manière à ce qu'une extrémité droite 10D de cette barre 10 puisse être avancée à l'intérieur de la partie droite du dispositif où des pièces seront usinées dans l'extrémité droite 10D de la barre 10.

Un dispositif de serrage de la barre 10 est prévu. On peut, par exemple, utiliser un mandrin de serrage 19 placé dans la broche, le plus près possible de l'ensemble d'usinage.

L'étanchéité de l'intérieur de la broche 2 est assurée par une chambre de surpression d'air 16 placée à l'extrémité droite de la broche 2 pour refouler le liquide électrolytique, de manière à ce qu'il ne pénètre pas dans la broche 2 entre la barre 10 et le flasque latéral 9.

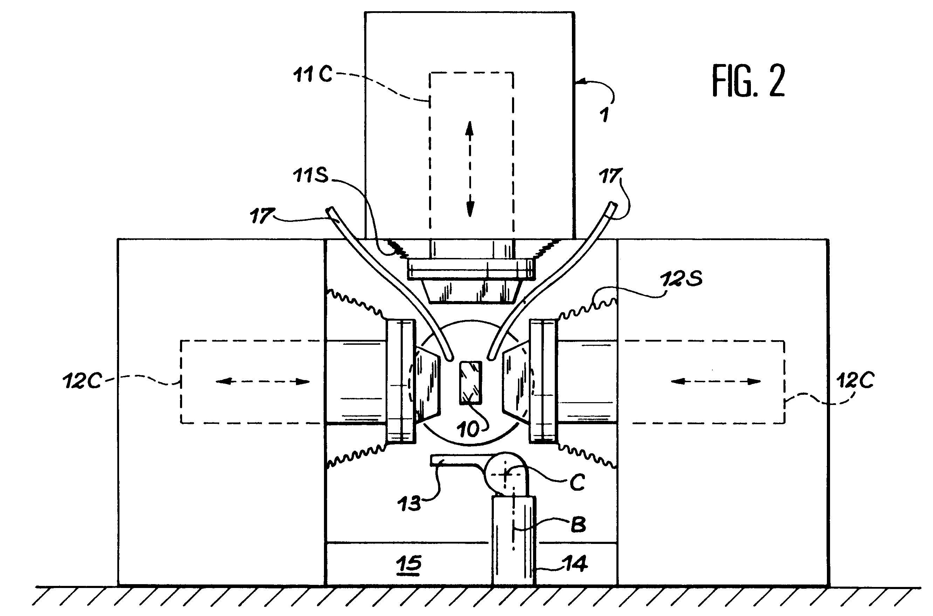

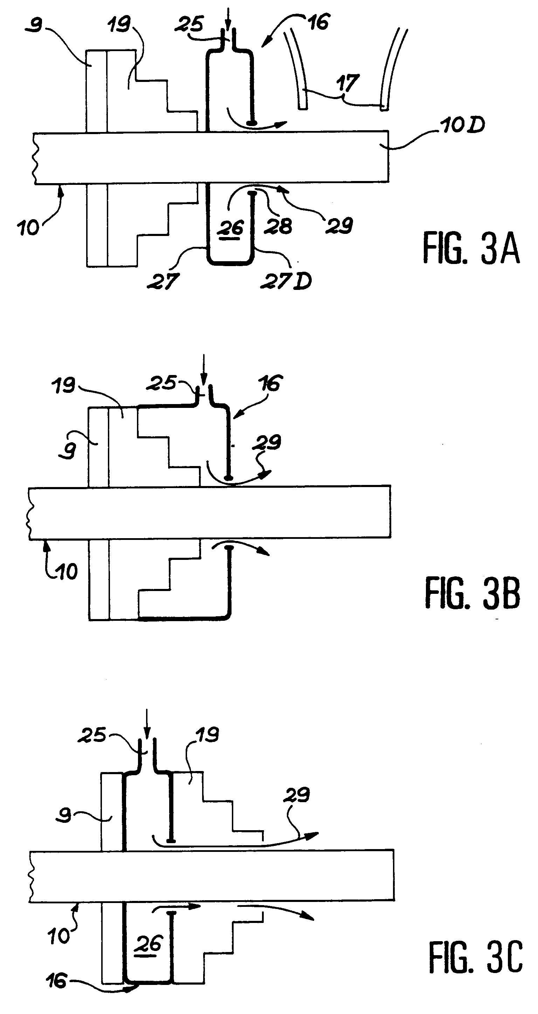

La réalisation de la chambre de pression 16 représentée sur la figure 2 est représentée plus en détail par la figure 3A. Elle comprend principalement une canalisation d'alimentation en air sous pression 25 débouchant dans une cavité 26 accumulant l'air sous pression et entourant la barre 10. Le diamètre interne de la paroi latérale droite 27D de la cavité 26 est très légèrement supérieur au diamètre externe de la barre 10 ménageant ainsi un orifice annulaire 28. Comme le montre les flèches 29, l'air en surpression s'échappe en entourant la barre 10 du côté de l'extrémité droite 10D. De cette manière, l'air sous pression chasse l'humidité ou le liquide électrolyte amené par les deux canalisations 17.

En référence à la figure 3B, les parois latérales 27 de la chambre de surpression 16 formant la cavité 26 peuvent être beaucoup plus écartées, de manière à contenir les mors du mandrin de serrage 19. Ce dernier se trouve donc ainsi protéger de toute humidité quelconque ou arrivage de liquide électrolytique.

En référence à la figure 3C, la chambre de surpression 16 peut être placée juste derrière les mors du mandrin de serrage 19 et juste devant le flasque latéral 9. De cette manière, l'air sous pression s'échappant de la chambre 26, entre les mors du mandrin de serrage 19 et la barre 10 débouche, comme l'indique la flèche 29 vers la zone arrosée par le liquide électrolytique.

La barre 10 peut recevoir le courant électrique soit par les mors du mandrin de serrage 19, soit par un câble ou une tresse 21 connecté(e) à la pièce de fixation 18 se trouvant à l'extrémité gauche 10G de la barre 10.

Sur la partie droite de la machine, se trouve l'ensemble d'usinage constitué de plusieurs cathodes d'usinage 11, 12 montées coulissantes, de préférence perpendiculairement à l'axe A de la barre 10. A cet effet, elles seront fixées sur des chariots respectifs 11C et 12C, eux-mêmes montés coulissants par rapport au bâti 1 du dispositif. Des soufflets respectifs, par exemple 11S, permettent d'assurer l'étanchéité de ces chariots 11C et 12C.

Le dispositif d'usinage se complète par un plateau de récupération 13 placé en dessous de l'extrémité droite 10D de la barre 10. Ce plateau de récupération 13 peut être monté pivotant autour d'un pied 14, de manière à pouvoir être dégagé. On a fait figurer deux axes de rotation B et C, respectivement vertical et horizontal pour schématiser deux rotations possibles de ce plateau de récupération 13 des pièces. D'autre part, un bac 15 de récupération de l'électrolyte est placé en dessous de cet ensemble d'usinage. On précise que l'électrolyte peut être amené de différentes manières autour de l'extrémité droite 10D de la barre 10, par exemple au moyen de deux tuyaux d'alimentation 17 débouchant au-dessus de cette extrémité droite 10D, de manière à ce que cette dernière soit complètement arrosée d'un tel liquide électrolytique, spécialement en regard des cathodes 11 et 12 d'usinage par électrochimie.

La figure 2 représente mieux le dispositif des cathodes 11C et 12C d'usinage électrochimique autour de la barre 10. On comprend mieux que toutes les surfaces de la barre 10 peuvent être usinées par plusieurs cathodes 11, 12 placées autour de la barre 10, le plateau 13 pouvant également être escamoté pour laisser place à une cathode d'usinage supplémentaire.

On peut envisager que l'opération de tronçonnage de l'extrémité de la barre 10 puisse être effectuée par une des trois cathodes 11C ou 12C, une fois que les autres opérations d'usinage ont été effectuées. Une telle cathode peut être une cathode couteau.

Les tuyaux d'alimentation en électrolyte 17 se complètent d'une pompe haute pression, d'un filtre et d'un système de maintien de température, non représentés, pour constituer avec le bac 15 un système d'alimentation en électrolyte.

Le dispositif se complète de moyens de commande pour commander l'avancement de la barre 10 au moyen de la broche 2 et les différents avancements successifs des cathodes 11C et 12C d'usinage. Ils peuvent également commander l'escamotage du plateau de récupération 13 et l'arrosage du liquide électrolyte, et piloter la régulation en température de l'électrolyte.

Ces moyens de commande sont schématisés ou symbolisés par un panneau de commande 20 placé au-dessus de la broche 2.

### Exemple de fonctionnement du dispositif

Si l'on prend en compte le fait que l'on dispose déjà de cathodes façonnées aux formes à obtenir, la première opération est la mise en place de ces cathodes 11, 12 sur les chariots coulissants 11C, 12C du dispositif d'usinage.

Un réglage de la position de départ de ces cathodes 11, 12 est alors nécessaire, de même que le réglage des avances maximales de ces cathodes.

La barre 10 devant constituer des pièces à usiner est alors mise en place dans la broche 2 par :
- l'ouverture des mors du mandrin de serrage 19 ;
- l'introduction de la barre 10 dans la broche 2 et dans ces mors du mandrin de serrage 19 ;
- mise en place de la bague de déplacement 6 qui supporte également l'extrémité gauche 10G de la barre 10 ; et
- blocage des mors du mandrin de serrage 19.

On peut alors procéder à l'avance de la barre 10 jusqu'à la position de référence axiale de départ.

S'ensuit l'usinage qui comprend les phases suivantes :
- avance commandée de la barre 10 pour amener son extrémité droite 10D dans le plan des cathodes 11 et 12 ;
- avance des cathodes d'usinage, par exemple les cathodes 12, simultanément ou de manière décalée dans le temps, selon la géométrie de la pièce à usiner ;
- retrait de ces cathodes 11 et 12.

On précise que la pièce usinée est encore liée à la barre 10 sur son pourtour par un morceau de matériau de faible épaisseur.

La phase de découpe s'effectue selon le processus suivant :
- rotation de la broche 2 d'un quart de tour ;
- rotation du plateau de récupération 13 pour être mis en place sous la pièce usinée ;
- avance de la cathode de coupe, par exemple la cathode 11, pour attaquer la petite partie de matière restante, c'est-à-dire séparant la pièce usinée de l'extrémité 10D de la barre 10 et, de ce fait, tronçonnage de cette barre 10.

L'évacuation de la pièce comporte les phases suivantes :
- récupération de la pièce usinée et du résidu de barre tronçonnée sur le plateau de récupération 13 ;
- rotation de ce plateau de récupération 13 d'un angle de 180° autour de son axe vertical B ;
- pivotement de ce même plateau de récupération 13 autour de son axe horizontal C ; et
- récupération des éléments dans un bac de manutention (non figuré).

La remise en condition de fonctionnement du dispositif se fait par les phases suivantes :
- retrait des cathodes 11 et 12 ;
- pivotement et rotation inversés du plateau de récupération 13 ;
- rotation inversée de la broche 2 ;
- ouverture des mors fixes du mandrin de serrage 17 ; et
- avance de la barre 10 et blocage en position pour un nouveau cycle d'usinage.

L'invention peut s'appliquer à l'usinage de pièces très diverses. Il est en outre prévu d'usiner des aubes de compresseurs haute pression, la barre de matériau étant légèrement plus large que la plus grande dimension du pied d'une telle aube.

## Revendications

1. Procédé de réalisation de pièces en trois dimensions par usinage électrochimique à partir d'une barre métallique (10) connectée à une source de courant, comprenant les phases suivantes :
- avancer la barre (10) devant ou à côté d'au moins une cathode d'usinage (11, 12) ;
- réaliser des formes déterminées dans la barre (10) par plongée de la ou des cathodes (11, 12) ;
- tronçonner la barre (10) au niveau d'une surface arrière de la pièce à usiner ; et
- avancer la barre (10) d'une longueur nécessaire et suffisante pour usiner la pièce suivante.

2. Procédé selon la revendication 1, caractérisé en ce que le tronçonnage de la barre (10) se fait par électrochimie par une cathode couteau (11, 12).

3. Procédé selon la revendication 1, caractérisé en ce que la source de courant est connectée à la barre (10) par une tresse (21) fixée à cette barre.

4. Procédé selon la revendication 1, caractérisé en ce que la source de courant est connectée à la barre (10) par les mors du mandrin de serrage (19) maintenant la barre (10).

5. Procédé selon la revendication 1, caractérisé en ce que la section de la barre (10) est optimisée en fonction de la géométrie des pièces à réaliser.

6. Procédé selon la revendication 1, caractérisé en ce que la barre (10) peut tourner autour de son axe principal (A).

7. Procédé selon la revendication 1, caractérisé en ce qu'on utilise un liquide électrolyte recouvrant les surfaces de l'extrémité (10D) de la barre (10) à usiner par arrosage d'au moins un jet (17) débouchant à proximité de cette extrémité (10D) de la barre (10).

8. Procédé selon la revendication 1, caractérisé en ce qu'on utilise un liquide électrolyte recouvrant les surfaces de l'extrémité (10D) de la barre (10) à usiner par arrosage au moyen d'au moins une douche.

9. Dispositif d'usinage électrochimique pour la mise en oeuvre du procédé selon la revendication 1, comprenant :
- un bâti (1) ;
- une broche (2) pour maintenir et alimenter la barre (10) et définissant un axe principal (A), comprenant :
. un dispositif d'avance de la barre (10) ;
. un dispositif de support et de serrage (19) de l'extrémité (10D) de la barre (10) à usiner ; et
. un moyen d'étanchéité pour empêcher le liquide électrolyte d'atteindre le dispositif d'avance de la barre (10) et le dispositif de serrage de la barre (19) ;
- un ensemble d'usinage comprenant :
. au moins une cathode d'usinage (11, 12) placée à l'extérieur de la broche (10) et montée coulissante de manière à pouvoir pénétrer dans l'extrémité (10D) de la barre (10) ; et
. un dispositif d'alimentation en électrolyte (17) pour arroser l'extrémité (10D) de la barre (10) placée en dehors de la broche (2) ; et
- des moyens de commande (20) de l'ensemble d'usinage de la broche (2) et du système d'alimentation électrolyte (17).

10. Dispositif selon la revendication 9, caractérisé en ce qu'il comprend une cathode de coupe pour sectionner l'extrémité (10D) de la barre (10) devant constituer la pièce.

11. Dispositif selon la revendication 8, caractérisé en ce que l'axe principal (A) de la broche (2) est horizontal.

12. Dispositif selon la revendication 9, caractérisé en ce que les moyens d'étanchéité comprennent une cavité (26) alimentée en air en surpression et entourant la barre (10) et laissant s'échapper l'air autour de celle-ci, du côté de l'extrémité (10D) de la barre (10).

## Claims

1. A process for making three-dimensional articles by electrochemical machining from a metal bar (10) connected to a source of electric current, comprising the following steps:
advancing the bar (10) in front of or beside at least one machining cathode (11, 12);
making predetermined shapes in the bar (10) by penetration of the or each cathode (11, 12);
cross-cutting the bar (10) at a rear surface of the article to be machined, and
advancing the bar (10) by a length necessary and sufficient to machine the next article.

2. A process according to claim 1, characterised in that the bar (10 is cross-cut electrochemically by a knife cathode (11, 12).

3. A process according to claim 1, characterised in that the current source is connected to the bar (10) by a braid (21) secured thereto.

4. A process according to claim 1, characterised in that the current source is connected to the bar (10) by the jaws of the chuck (19) which retains the bar (10).

5. A process according to claim 1, characterised in that the cross-section of the bar (10) is optimised in dependence upon the geometry of the articles to be made.

6. A process according to claim 1, characterised in that the bar (10) can rotate around its main axis (A).

7. A process according to claim 1, characterised in that the surfaces of the end (10D) of the bar (10) to be machined are wetted by a liquid electrolyte supplied by at least one jet (17) discharging near said end (10D) of the bar.

8. A process according to claim 1, characterised in that the surfaces of the end (10D) of the bar (10) to be machined are wetted by a liquid electrolyte supplied by at least one shower.

9. An electrochemical machining apparatus for carrying out the process according to claim 1, comprising:
a frame;
a spindle (2) for retaining and feeding the bar (10) and defining a main axis (A), comprising:
means for advancing the bar (10),
means (19) for supporting and clamping the end (10D) of the bar (10) to be machined, and
sealing means to prevent liquid electrolyte from reaching the bar-advancing means and the bar-clamping means (19);
a machining assembly comprising:
at least one machining cathode (11,12) disposed outside the spindle and slidably mounted so that it can penetrate into the bar end (10D); and
an electrolyte feed system for wetting the bar end (10D) disposed outside the spindle (2); and
control means (20) for the machining assembly. the spindle (2) and electrolyte feed system (17).

10. An apparatus according to claim 9, characterised in that it comprises a cutting cathode for crosscutting the end (10D) of the bar (10) in front of the article to be made.

11. An apparatus according to claim 9, characterised in that the main axis (A) of the spindle (2) is horizontal.

12. An apparatus according to claim 9, characterised in that the sealing means comprise a cavity (26) supplied with air at a positive pressure and extending around the bar (10) and allowing air to escape around the bar (10) on the side near the bar end (10D).

## Patentansprüche

1. Verfahren zur Herstellung von **dreidimensionalen Teilen durch elektrochemisches Bearbeiten** aus einem Metallstab (10), der mit einer Stromquelle verbunden ist, mit den folgenden Verfahrensschritten:
- Vorbewegen des Stabes (10) vor oder seitlich von wenigstens einer Bearbeitungskathode (11, 12).
- Ausbilden der festgelegten Formen in dem Stab (10) durch Eintauchen der Kathode(n) (11, 12),
- Ablängen des Stabes (10) in Höhe einer hinteren Fläche des zu bearbeitenden Teils und
- **Vorbewegen** des Stabes (10) um eine Länge, die für das Bearbeiten des nächsten Teils notwendig und ausreichend ist.

2. Verfahren nach Anspruch 1, dadurch gekennzeichnet, daß das Ablängen des Stabes (10) elektrochemisch durch eine Messerkathode (11, 12) erfolgt.

3. Verfahren nach Anspruch 1, dadurch gekennzeichnet, daß die Stromquelle mit dem Stab (10) über ein an dem Stab befestigtes Litzenband (21) verbunden ist.

4. Verfahren nach Anspruch 1, dadurch gekennzeichnet, daß die Stromquelle mit dem Stab (10) über die Spannbacken des Spannfutters (19) verbunden ist, das den Stab (10) hält.

5. Verfahren nach Anspruch 1, dadurch gekennzeichnet, daß der Querschnitt des Stabes (10) im Hinblick auf die Geometrie der herzustellenden Teile optimiert ist.

6. Verfahren nach Anspruch 1, dadurch gekennzeichnet, daß der Stab (10) sich um seine Hauptachse (A) drehen kann.

7. Verfahren nach Anspruch 1, dadurch gekennzeichnet, daß man eine elektrolytische Flüssigkeit benutzt, die die zu bearbeitenden Flächen im Endbereich (10D) des Stabes (10) durch Benetzen mit wenigstens einem Strahl (17) bedeckt, der in der Nähe des Endbereichs (10D) des Stabes (10) austritt.

8. Verfahren nach Anspruch 1, dadurch gekennzeichnet, daß man eine elektrolytische Flüssigkeit benutzt, die die zu bearbeitenden Flächen im Endbereich (10D) des Stabes (10) durch Benetzen mit wenigstens einer Dusche bedeckt.

9. Elektrochemische Bearbeitungsvorrichtung für die Durchführung des Verfahrens nach Anspruch 1, mit
- einem Gestell (1),
- einer Spindel (2) zum Halten und Zuführen des Stabes (10), die eine Hauptachse (A) definiert und folgende Teile aufweist:
• eine Vorrichtung zum **Vorbewegen des Stabes** (10),
• eine Vorrichtung (19) zum Halten und Einspannen des zu bearbeitenden Endbereichs (10D) des Stabes (10) und
• ein Dichtungsmittel, um zu verhindern, daß der flüssige Elektrolyt die Vorrichtung zum Vorbringen des Stabes (10) und die Vorrichtung (19) zum Einspannen des Stabes erreicht,
- einer Bearbeitungseinheit, die folgende Teile aufweist:
• wenigstens eine Bearbeitungskathode (11, 12), die außerhalb der Spindel (2) angeordnet und in der Weise verschiebbar montiert ist, daß sie in den Endbereich (10D) des Stabes (10) eindringen kann, und
• eine Vorrichtung (17) für die Elektrolytzuführung zum Benetzen des außerhalb der Spindel (2) liegenden Endbereichs (10D) des Stabes (10),
- und Steuermitteln (20) zur Steuerung der Bearbeitungseinheit der Spindel (2) und des Systems (17) für die Elektrolytzuführung.

10. Vorrichtung nach Anspruch 9, dadurch gekennzeichnet, daß sie eine Messerkathode aufweist zum Abtrennen des Endbereichs (10D) des Stabes (10), der das Teil bilden soll.

11. Vorrichtung nach Anspruch 9, dadurch gekennzeichnet, daß die Hauptachse (A) der Spindel (2) horizontal verläuft.

12. Vorrichtung nach Anspruch 9, dadurch gekennzeichnet, daß die Dichtungsmittel einen Hohlraum (26) umfassen, dem Druckluft zugeführt wird und der den Stab (10) umschließt und die Luft um diesen auf der Seite des Endbereichs (10D) des Stabes (10) entweichen läßt.
